# EUROPEAN PATENT APPLICATION

(11) **EP 3 989 544 A1**
(43) Date of publication of application: **27.04.2022**
(21) Application number: 20831671.1
(22) Date of filing: 11.06.2020
(51) Int. Cl.: H04N 19/103, H04N 19/136, H04N 19/186, H04N 19/593, H04N 19/96

(54) **IMAGE DECODING DEVICE, IMAGE DECODING METHOD, AND PROGRAM**

(30) Priority: 24.06.2019 JP 2019116785
(71) Applicant: KDDI Corporation, Tokyo 163-8003 (JP)
(72) Inventor: KAWAMURA, Kei, Fujimino-shi, Saitama 356-8502 (JP); UNNO, Kyohei, Fujimino-shi, Saitama 356-8502 (JP); NAITO, Sei, Fujimino-shi, Saitama 356-8502 (JP)
(74) Representative: Fink Numrich Patentanwälte PartmbB
(86) International application number: PCT/JP2020/022978
(87) International publication number: WO 2020/262012

(57) **Abstract**

An image decoding device (200) includes: a block structure decoding unit (201A) configured to decode the coded data to acquire luminance block division information and chrominance block division information; a determination unit (201B) configured to determine whether or not a cross-component linear model method is applicable based on the luminance block division information and the chrominance block division information; and a chrominance intra-prediction method decoding unit (201C) configured to decode a chrominance intra-prediction method according to a result of the determination.

## Description

### TECHNICAL FIELD

The present invention relates to an image decoding device, an image decoding method, and a program.

### BACKGROUND ART

Conventionally, an image coding system using intra-prediction or inter-prediction, transform/quantization of a prediction residual signal, and entropy coding has been proposed (see, for example, Non Patent Literature 1).

Hereinafter, a coding block division method in versatile video coding (WC), which is a next-generation video coding method, and a chrominance intra-prediction method in intra-prediction will be described (see Non

### Patent Literature 2).

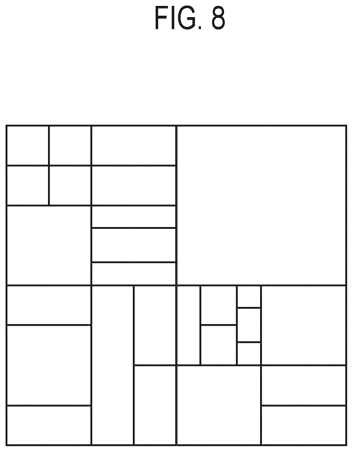

As illustrated in Fig. 8, coding blocks in both methods are recursively divided by using a quad tree, a binary tree, and a ternary tree. Here, the same division pattern may be selected or different division patterns may be selected between a luminance component and a chrominance component.

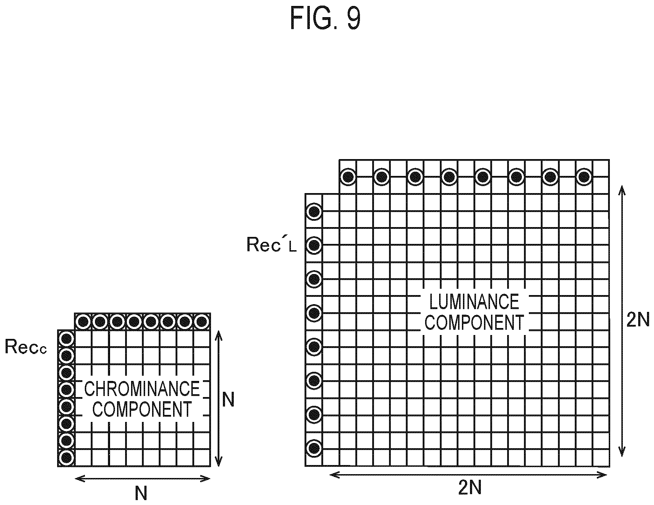

The chrominance intra-prediction method includes a cross-component linear model (CCLM) method of linearly predicting a chrominance component from a reconfigured luminance component, in addition to an intra color component prediction method similar to a luminance intra-prediction method. In the CCLM method, since the luminance component and the chrominance component have different numbers of samples in a 4:2:0 color format, a luminance pixel corresponding to a chrominance pixel is derived by smoothing as illustrated in Fig. 9. A block structure obtained by dividing the coding block and the determined intra-prediction method are each subjected to entropy coding.

### CITATION LIST

### NON PATENT LITERATURE

Non Patent Literature 1: ITU-T H.265 High Efficiency Video Coding
Non Patent Literature 2: Versatile Video Coding (Draft 5)

### PATENT LITERATURE

Patent Literature 1: Japanese Patent Application No. 2014-001343

### SUMMARY OF INVENTION

### TECHNICAL PROBLEM

However, in the VVC which is a next-generation video coding method, since a coding block size and a transform block size are extended as compared with the latest video coding method, high efficiency video coding (HEVC), when a chrominance component is coded by the CCLM method, there is a problem that a delay of a decoding timing of the chrominance component with respect to a decoding timing of a luminance component increases in proportion to the block size.

Therefore, the present invention has been made in view of the above-described problems, and an object of the present invention is to provide an image decoding device, an image decoding method, and a program capable of reducing the worst value of a delay of a decoding timing of a chrominance component with respect to a decoding timing of a luminance component in a case where the chrominance component is coded by a CCLM method while allowing a certain decrease in coding performance.

### SOLUTION TO PROBLEM

The first aspect of the present invention is summarized as an image decoding device configured to decode coded data, the image decoding device including: a block structure decoding unit configured to decode the coded data to acquire luminance block division information and chrominance block division information; a determination unit configured to determine whether or not a cross-component linear model method is applicable based on the luminance block division information and the chrominance block division information; and a chrominance intra-prediction method decoding unit configured to decode a chrominance intra-prediction method according to a result of the determination.

The second aspect of the present invention is summarized as an image decoding method for decoding coded data, the image decoding method including: decoding the coded data to acquire luminance block division information and chrominance block division information; determining whether or not a cross-component linear model method is applicable based on the luminance block division information and the chrominance block division information; and decoding a chrominance intra-prediction method according to a result of the determination.

The third aspect of the present invention is summarized as a program for causing a computer to function as an image decoding device configured to decode coded data, the image decoding device including: a block structure decoding unit configured to decode the coded data to acquire luminance block division information and chrominance block division information; a determination unit configured to determine whether or not a cross-component linear model method is applicable based on the luminance block division information and the chrominance block division information; and a chrominance intra-prediction method decoding unit configured to decode a chrominance intra-prediction method according to a result of the determination.

### ADVANTAGEOUS EFFECTS OF INVENTION

According to the present invention, it is possible to provide an image decoding device, an image decoding method, and a program capable of reducing the worst value of a delay of a decoding timing of a chrominance component with respect to a decoding timing of a luminance component in a case where the chrominance component is coded by a CCLM method while allowing a certain decrease in coding performance.

### BRIEF DESCRIPTION OF DRAWINGS

Fig. 1 is a diagram illustrating an example of a configuration of an image processing system 1 according to an embodiment.
Fig. 2 is a diagram illustrating an example of functional blocks of an image coding device 100 according to the embodiment.
Fig. 3 is a diagram illustrating an example of some functional blocks of an entropy coding unit 104 of the image coding device 100 according to the embodiment.
Fig. 4 is a diagram illustrating an example of functional blocks of an image decoding device 200 according to the embodiment.
Fig. 5 is a diagram illustrating an example of some functional blocks of an entropy decoding unit 201 of the image decoding device 200 according to the embodiment.
Fig. 6 is a flowchart illustrating an example of an operation of the entropy decoding unit 201 of the image decoding device 200 according to the embodiment.
Fig. 7 is a diagram for describing a fourth embodiment.
Fig. 8 is a diagram for describing a conventional technique.
Fig. 9 is a diagram for describing the conventional technique.

### DESCRIPTION OF EMBODIMENTS

Hereinafter, embodiments of the present invention will be described with reference to the drawings. Note that components in the following embodiments can be replaced with existing components or the like as appropriate, and various variations including combinations with other existing components are possible. Therefore, the following description of the embodiments does not limit the contents of the invention described in the claims.

### (First Embodiment)

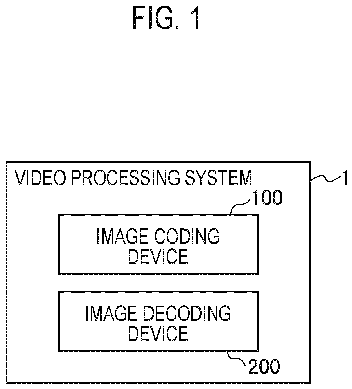

Fig. 1 is a diagram illustrating an example of functional blocks of an image processing system 1 according to a first embodiment of the present invention. The image processing system 1 includes an image coding device 100 that codes a video to generate coded data, and an image decoding device 200 that decodes the coded data generated by the image coding device 100. The above-described coded data is transmitted and received between the image coding device 100 and the image decoding device 200 via a transmission path, for example.

### <Image Coding Device 100>

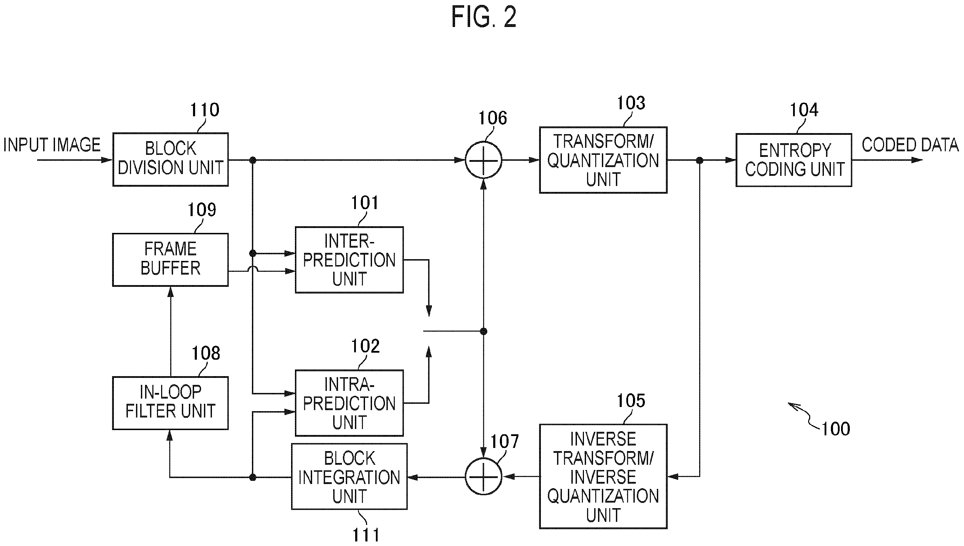

Fig. 2 is a diagram illustrating an example of functional blocks of the image coding device 100. As illustrated in Fig. 2, the image coding device 100 includes an inter-prediction unit 101, an intra-prediction unit 102, a transform/quantization unit 103, an entropy coding unit 104, an inverse transform/inverse quantization unit 105, a subtracting unit 106, an adding unit 107, an in-loop filter unit 108, a frame buffer 109, a block division unit 110, and a block integration unit 111.

The block division unit 110 is configured to divide an entire screen of an input image into the same squares, and output an image (divided image) obtained by recursive division using a quad tree or the like.

The inter-prediction unit 101 is configured to perform inter-prediction by using the divided image input by the block division unit 110 and a locally decoded image after filtering (described later) input from the frame buffer 109 to generate and output an inter-prediction image.

The intra-prediction unit 102 is configured to perform intra-prediction by using the divided image input by the block division unit 110, a locally decoded image before filtering, and a chrominance intra-prediction method determined by a control unit (not illustrated) to generate and output an intra-prediction image.

The transform/quantization unit 103 is configured to execute orthogonal transform processing on a residual signal input from the subtracting unit 106, execute quantization processing on a transform coefficient obtained by the orthogonal transform processing, and output a quantized level value obtained by the quantization processing.

The entropy coding unit 104 is configured to perform entropy coding on the quantized level value input from the transform/quantization unit 103 and side information (relevant information such as a prediction mode and a motion vector necessary for reconfiguration of a pixel value determined by the control unit (not illustrated)) and output the coded data.

As will be described later, the entropy coding unit 104 is also configured to perform entropy coding on the chrominance intra-prediction method and output a result of the entropy coding as the coded data.

The inverse transform/inverse quantization unit 105 is configured to execute inverse quantization processing on the quantized level value input from the transform/quantization unit 103, execute inverse orthogonal transform processing on a transform coefficient obtained by the inverse quantization processing, and output an inversely orthogonally transformed residual signal obtained by the inverse orthogonal transform processing.

The subtracting unit 106 is configured to output the residual signal that is a difference between the divided image input by the block division unit 110 and the intra-prediction image or the inter-prediction image.

The adding unit 107 is configured to output a divided image obtained by adding the inversely orthogonally transformed residual signal input from the inverse transform/inverse quantization unit 105 and the intra-prediction image or the inter-prediction image.

The block integration unit 111 is configured to output the locally decoded image before filtering obtained by integrating the divided images input from the adding unit 107.

The in-loop filter unit 108 is configured to apply in-loop filtering processing such as deblocking filtering processing to the locally decoded image before filtering input from the block integration unit 111 to generate and output the locally decoded image after filtering.

The frame buffer 109 accumulates the locally decoded image after filtering and appropriately supplies the locally decoded image after filtering to the inter-prediction unit 101 as the locally decoded image after filtering.

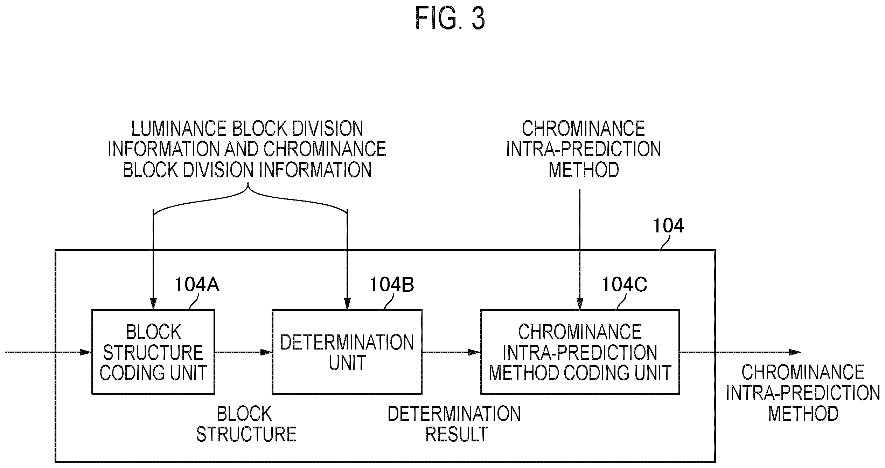

Hereinafter, the entropy coding unit 104 of the image coding device 100 according to the present embodiment will be described with reference to Fig. 3. Fig. 3 is a diagram illustrating an example of some functional blocks of the entropy coding unit 104 of the image coding device 100 according to the present embodiment.

As illustrated in Fig. 3, the in-loop filter unit 108 of the image coding device 100 according to the present embodiment includes a block structure coding unit 104A, a determination unit 104B, and a chrominance intra-prediction method coding unit 104C.

The block structure coding unit 104A is configured to code luminance block division information and chrominance block division information determined by the control unit (not illustrated) as a block structure and output the block structure (luminance block division information and chrominance block division information).

Here, the luminance block division information and the chrominance block division information include information regarding a division pattern of a luminance component and information regarding a division pattern of a chrominance component, respectively.

The determination unit 104B is configured to determine whether or not a cross-component linear model (CCLM) method is applicable based on the block structure input from the block structure coding unit 104A, and output the determination result. Note that such determination is performed not in units of sequences but in units of blocks.

The chrominance intra-prediction method coding unit 104C uses the determination result of the determination unit 104B and the chrominance intra-prediction method determined by the control unit (not illustrated) as inputs, codes the chrominance intra-prediction method by using a coding table based on the determination result, and outputs the coded chrominance intra-prediction method as the coded data.

Here, such a coding table is defined in Non Patent Literature 2.

### <Image Decoding Device 200>

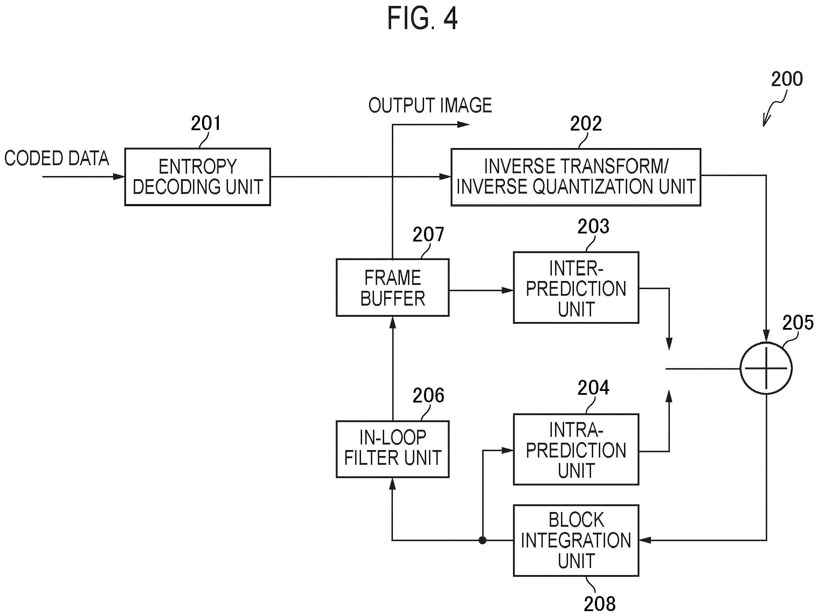

Fig. 4 is a block diagram of the image decoding device 200 according to the present embodiment. As illustrated in Fig. 3, the image decoding device 200 according to the present embodiment includes an entropy decoding unit 201, an inverse transform/inverse quantization unit 202, an inter-prediction unit 203, an intra-prediction unit 204, an adding unit 205, an in-loop filter unit 206, a frame buffer 207, and a block integration unit 208.

The entropy decoding unit 201 is configured to perform entropy decoding on the coded data and output a quantized level value and side information.

The inverse transform/inverse quantization unit 202 is configured to execute inverse quantization processing on the quantized level value input from the entropy decoding unit 201, execute inverse orthogonal transform processing on a result obtained by performing the inverse quantization processing, and output the result as the residual signal.

The inter-prediction unit 203 is configured to perform inter-prediction by using a locally decoded image after filtering input from the frame buffer 207 to generate and output an inter-prediction image.

The intra-prediction unit 204 is configured to perform intra-prediction by using a locally decoded image before filtering input from the adding unit 205 to generate and output an intra predicted image. Here, the locally decoded image before filtering is a signal obtained by adding the residual signal and the prediction image.

The adding unit 205 is configured to output a divided image obtained by adding the residual signal input from the inverse trans form/inverse quantization unit 202 and the prediction image (the inter-prediction image input from the inter-prediction unit 203 or the intra-prediction image input from the intra-prediction unit 204).

Here, the prediction image is a prediction image calculated by a prediction method obtained by entropy decoding among the inter-prediction image input from the inter-prediction unit 203 and the intra-prediction image input from the intra-prediction unit 204.

The block integration unit 208 is configured to output the locally decoded image before filtering obtained by integrating the divided images input from the adding unit 205.

The in-loop filter unit 206 is configured to apply in-loop filtering processing such as deblocking filtering processing to the locally decoded image before filtering input from the block integration unit 208 to generate and output the locally decoded image after filtering.

The frame buffer 207 is configured to accumulate the locally decoded image after filtering input from the in-loop filter 206, appropriately supply the locally decoded image after filtering to the inter-prediction unit 203 as the locally decoded image after filtering, and output the locally decoded image after filtering as a decoded image.

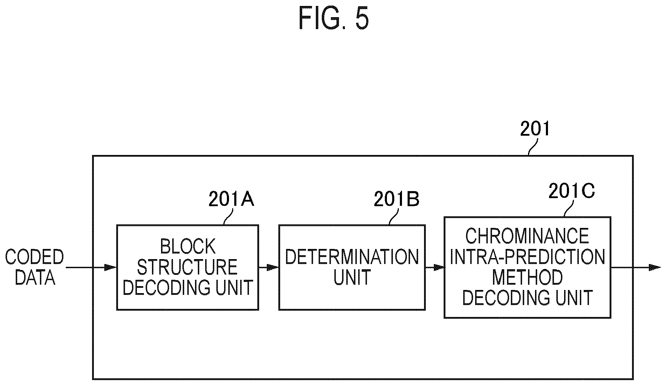

Hereinafter, the entropy decoding unit 201 of the image decoding device 200 according to the present embodiment will be described with reference to Fig. 5. Fig. 5 is a diagram illustrating an example of some functional blocks of the entropy decoding unit 201 of the image decoding device 200 according to the present embodiment.

As illustrated in Fig. 5, the entropy decoding unit 201 of the image decoding device 200 according to the present embodiment includes a block structure decoding unit 201A, a determination unit 201B, and a chrominance intra-prediction method decoding unit 201C.

The block structure decoding unit 201A is configured to decode the coded data output by the image coding device 100 to obtain the block structure including the luminance block division information and the chrominance block division information.

The determination unit 201B is configured to determine whether or not the CCLM method is applicable based on the luminance block division information and the chrominance block division information.

The chrominance intra-prediction method decoding unit 201C is configured to decode the chrominance intra-prediction method according to the determination result. Specifically, the chrominance intra-prediction method decoding unit 201C is configured to decode the chrominance intra-prediction method by using a decoding table based on the determination result.

Here, such a decoding table is defined in Non Patent Literature 2.

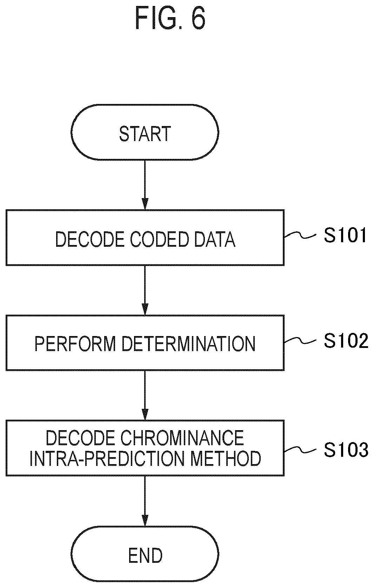

Hereinafter, an example of an operation of the entropy decoding unit 201 according to the present embodiment will be described with reference to Fig. 6.

As illustrated in Fig. 6, in Step S101, the entropy decoding unit 201 decodes the coded data to acquire the luminance block division information and the chrominance block division information.

In Step S102, the entropy decoding unit 201 determines whether or not the CCLM method is applicable based on the luminance block division information and the chrominance block division information.

In Step S103, the entropy decoding unit 201 decodes the chrominance intra-prediction method according to the determination result.

In the image processing system 1 according to the present embodiment, it is possible to introduce restrictions on the division pattern and size of the coding block to which the CCLM method is applicable, and to limit a maximum value of a delay amount of a decoding timing of the chrominance component with respect to a decoding timing of the luminance component.

For example, the maximum block size to which the CCLM method is applicable is defined, and the CCLM method can be selected only in a case where the block is divided by a quad-tree structure until the maximum block size is reached. In this manner, it is determined whether or not the CCLM method is applicable in units of blocks instead of in units of sequences.

### (Second Embodiment)

Hereinafter, an image processing system 1 according to a second embodiment of the present invention will be described focusing on differences from the image processing system 1 according to the first embodiment described above.

In the present embodiment, a determination unit 104B/201B is configured to determine that the CCLM method is applicable in a case where the division pattern of the luminance component matches the division pattern of the chrominance component based on the luminance block division information and the chrominance block division information.

On the other hand, the determination unit 104B/201B is configured to determine that the CCLM method is not applicable in a case where the division pattern of the luminance component does not match the division pattern of the chrominance component based on the luminance block division information and the chrominance block division information.

### (Third Embodiment)

Hereinafter, an image processing system 1 according to a third embodiment of the present invention will be described focusing on differences from the image processing systems 1 according to the first embodiment and the second embodiment described above.

In the present embodiment, a block structure coding unit 104A is configured to code and output, as the block structure, the luminance block division information, the chrominance block division information, and the block size determined by a control unit (not illustrated) that are input.

Further, a block structure decoding unit 201A is configured to decode coded data output by an image coding device 100 to acquire the luminance block division information, the chrominance block division information, and the block size.

A determination unit 104B/201B is configured to determine that the CCLM method is not applicable in a case where the above-described block size is larger than a predetermined threshold value.

On the other hand, the determination unit 104B/201B is configured to use the determination result for the predetermined block size in a case where the above-described block size is equal to or smaller than the predetermined threshold value.

For example, threshold values of block sizes of a luminance block and a corresponding chrominance block are 32 × 32 pixels and 16 × 16 pixels, respectively.

Furthermore, for example, the threshold value of the luminance block size may be 32 × 64 pixels or 64 × 32 pixels in a case of the same division pattern (single tree) between the luminance component and the chrominance component, and the threshold value of the luminance block size may be 32 × 32 pixels in a case of different division patterns (dual tree). Note that the threshold values of the block sizes of the corresponding chrominance blocks are 16 × 32 pixels, 32 × 16 pixels, and 16 × 16 pixels, respectively. This means that a delay two blocks of 32 × 32 pixels are allowed regardless of the division pattern of the luminance component.

### (Fourth Embodiment)

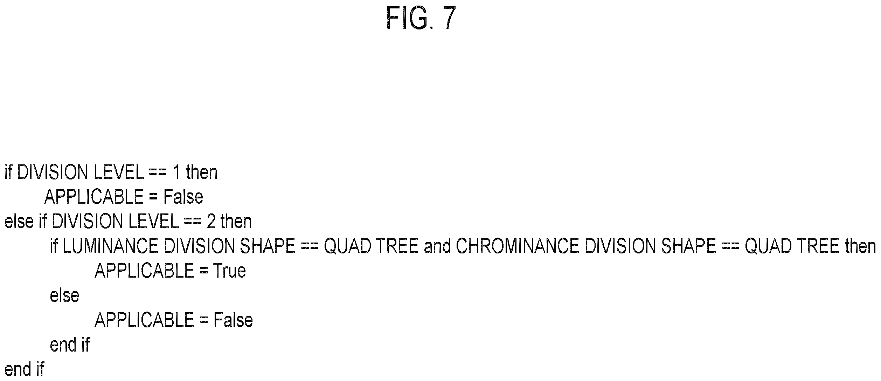

Hereinafter, an image processing system 1 according to a fourth embodiment of the present invention will be described focusing on differences from the image processing system 1 according to the above-described third embodiment with reference to Fig. 7.

In the present embodiment, a determination unit 104B/201B is configured to determine that the CCLM method is not applicable in a case where the above-described block size is larger than a predetermined threshold value.

On the other hand, the determination unit 104B/201B is configured to perform the above-described determination according to the determination condition illustrated in Fig. 7 in a case where the above-described block size is equal to or smaller than the predetermined threshold value.

That is, in such a case, the determination unit 104B/201B is configured to determine that the CCLM method is applicable in a case where the division in the predetermined block size is recursive quad-tree division and the division pattern of the luminance component matches the division pattern of the chrominance component, and to determine that the CCLM method is not applicable in other cases.

The determination condition illustrated in Fig. 7 is applied every time the coding block is divided, and the determination unit 104B/201B determines whether or not the CCLM method is applicable.

Furthermore, the division level illustrated in Fig. 7 is related to the block size, and the block size decreases as a numerical value of the division level increases.

In the example of Fig. 7, the determination unit 104B/201B determines that the CCLM method is applicable only in a case where the division level is 2 and both a luminance division shape and a chrominance division shape are the quad tree. However, in a case where the division level is 3 or higher, the determination result in a case where the division level is 2 is inherited.

Note that, in the example of Fig. 7, the determination unit 104B/201B is configured to determine that the CCLM method is not applicable in a case where the division level is 1 (in a case where the above-described block size is equal to or smaller than the predetermined threshold value).

### REFERENCE SIGNS LIST

1 Image processing system
100 Image encoding device
101, 203 Inter-prediction unit
102, 204 Intra-prediction unit
103 Transformation/quantization unit
104 Entropy coding unit
104A Block structure coding unit
104B, 201B Determination unit
104C Chrominance intra-prediction method coding unit
105, 202 Inverse transformation/inverse quantization unit
106 Subtractor
107, 205 Adder
108, 206 In-loop filter unit
109, 207 Frame buffer
110 Block division unit
111, 208 Block integration unit
200 Image decoding device
201 Decoding unit
201A Block structure decoding unit
201C Chrominance intra-prediction method decoding unit

## Claims

1. An image decoding device configured to decode coded data, the image decoding device comprising:
a block structure decoding unit configured to decode the coded data to acquire luminance block division information and chrominance block division information;
a determination unit configured to determine whether or not a cross-component linear model method is applicable based on the luminance block division information and the chrominance block division information; and
a chrominance intra-prediction method decoding unit configured to decode a chrominance intra-prediction method according to a result of the determination.

2. The image decoding device according to claim 1, wherein
the block structure decoding unit is configured to decode the coded data to acquire the luminance block division information, the chrominance block division information, and a block size, and
the determination unit is configured to determine that the cross-component linear model method is not applicable in a case where the block size is larger than a predetermined threshold value.

3. The image decoding device according to claim 2, wherein
the determination unit is configured to use a result of the determination for a predetermined block size in a case where the block size is equal to or smaller than the threshold value.

4. The image decoding device according to claim 1, wherein
the determination unit is configured to:
determine that the cross-component linear model method is applicable in a case where a division pattern of a luminance component matches a division pattern of a chrominance component, and
determine that the cross-component linear model method is not applicable in a case where the division pattern of the luminance component does not match the division pattern of the chrominance component.

5. The image decoding device according to claim 4, wherein
the block structure decoding unit is configured to decode the coded data to acquire the luminance block division information, the chrominance block division information, and a block size,
the determination unit is configured to:
in a case where the block size is larger than a predetermined threshold value, determine that the cross-component linear model method is not applicable and
in a case where the block size is equal to or smaller than the threshold value, and
in a case where division in a predetermined block size is recursive quad-tree division and the division pattern of the luminance component matches the division pattern of the chrominance component, determine that the cross-component linear model method is applicable, and
in other cases, determine that the cross-component linear model method is not applicable.

6. An image decoding method for decoding coded data, the image decoding method comprising:
decoding the coded data to acquire luminance block division information and chrominance block division information;
determining whether or not a cross-component linear model method is applicable based on the luminance block division information and the chrominance block division information; and
decoding a chrominance intra-prediction method according to a result of the determination.

7. A program for causing a computer to function as an image decoding device configured to decode coded data, the image decoding device including:
a block structure decoding unit configured to decode the coded data to acquire luminance block division information and chrominance block division information;
a determination unit configured to determine whether or not a cross-component linear model method is applicable based on the luminance block division information and the chrominance block division information; and
a chrominance intra-prediction method decoding unit configured to decode a chrominance intra-prediction method according to a result of the determination.
